# EUROPEAN PATENT APPLICATION

(11) **EP 4 467 221 A1**
(43) Date of publication of application: **27.11.2024**
(21) Application number: 24178013.9
(22) Date of filing: 24.05.2024
(51) Int. Cl.: B01D 45/16, B01D 50/20, B04C 3/04

(54) **RADIALLY ORIENTED, MODULAR PRE-CLEANER SYSTEM**

(30) Priority: 25.05.2023 US 202318323801; 08.06.2023 US 202363507086 P
(71) Applicant: MANN+HUMMEL GmbH, 71636 Ludwigsburg (DE)
(72) Inventor: JACKSON, Ryan, Willow Spring, NC, 27592 (US); LEFFLER, Joseph, Mattawan, MI, 49071 (US)
(74) Representative: Mann + Hummel Intellectual Property

(57) **Abstract**

A filtration assembly includes a modular frame and an array of particulate separation elements for removing particulates from air. The frame defines a plurality of sockets and including a particulate tray. Each particulate separation element of the array of particulate separation elements is disposed within a respective socket of the plurality of sockets and defines an inlet of the filtration assembly. The modular frame is operable to be selectively modified to change the number of particulate separation elements received within the frame.

## Description

### TECHNICAL FIELD

This disclosure relates to a radially oriented, modular pre-cleaner system.

### BACKGROUND

This section provides background information related to the present disclosure and is not necessarily prior art.

Motor vehicles conventionally include an air filter for processing air within the motor vehicle system. Conventional air filters generally include at least one layer of very fine fabric placed within the flow of air to capture dirt and other debris from the air that passes through the filter media. There is a balance between the filter media size and throughput of air through the filter media. For example, a smaller filter media may be appropriate for a lower airflow. Alternatively, a larger filter media may accommodate increased airflow requirements. Thus, conventional media-based filtration systems may require a wide range of filter media types and sizes to accommodate varying filtration capacities associated with different filtration environments.

### SUMMARY

One aspect of the disclosure provides a filtration assembly including a frame and an array of particulate separation elements for removing particulates from air. The frame defines a plurality of sockets and including a particulate tray. Each particulate separation element of the array of particulate separation elements is disposed within a respective socket of the plurality of sockets and defines an inlet of the filtration assembly.

Implementations of the disclosure may include one or more of the following optional features. In some implementations, the particulate tray is configured to collect the removed particulates. In some examples, the frame further includes a cap and one or more spacers, the one or more spacers disposed between the cap and the particulate tray. In these examples, the cap, the one or more spacers, and the particulate tray may be axially aligned along a central axis of the filtration assembly. Additionally or alternatively, the cap, the one or more spacers, and the particulate tray may be secured together via fasteners.

In some implementations, the array of particulate separation elements are disposed within the frame in a radial array about a central axis of the filtration assembly. In these implementations, frame may further define a central opening in fluid communication with the array of particulate separation elements. Here, the central opening defines an outlet of the filtration assembly. In these implementations, the central opening may be substantially coaxial with the central axis of the filtration assembly. Additionally or alternatively, a central axis of each particulate separation element in the array of particulate separation elements may be substantially perpendicular to the central axis of the filtration assembly. In some examples, the array of particulate separation elements are disposed in a three-dimensional radial array about a central axis of the filtration assembly.

Another aspect of the disclosure provides a filtration assembly including a frame and an array of particulate separation elements. The frame defines a plurality of sockets. Each particulate separation element of the array of particulate separation elements is disposed within a respective socket within the frame in a radial array about a central axis of the filtration assembly.

This aspect may include one or more of the following optional features. In some implementations, each particulate separation element of the array of particulate separation elements defines an inlet of the filtration assembly. In some examples, the frame includes a particulate tray configured to collect the removed particulates. In these examples, the frame may further include a cap and one or more spacers. Here, the one or more spacers are disposed between the cap and the particulate tray. The cap, the one or more spacers, and the particulate tray may be axially aligned along the central axis of the filtration assembly. Additionally or alternatively, the cap, the one or more spacers, and the particulate tray are secured together via fasteners.

In some implementations, the frame further defines a central opening in fluid communication with the array of particulate separation elements, the central opening defining an outlet of the filtration assembly. In these implementations, the central opening may be substantially coaxial with the central axis of the filtration assembly. Additionally or alternatively, a central axis of each particulate separation element in the array of particulate separation elements may be substantially perpendicular to the central axis of the filtration assembly. In some examples, the array of particulate separation elements are disposed in a three-dimensional radial array about the central axis of the filtration assembly.

The details of one or more implementations of the disclosure are set forth in the accompanying drawings and the description below. Other aspects, features, and advantages will be apparent from the description and drawings, and from the claims.

### DESCRIPTION OF DRAWINGS

FIG. 1 is a top perspective view of the filtration system according to the present disclosure.
FIG. 2 is a bottom perspective view of the filtration system of FIG. 1.
FIG. 3 is a front perspective view of a filtration assembly of the filtration system of FIG. 1.
FIG. 4 is a partial front perspective view of the filtration assembly of the filtration system of FIG. 1.
FIG. 5 is a partial top view of the filtration assembly of the filtration system of FIG. 1.
FIG. 6 is a partial top perspective view of a frame and array of particulate separation elements of the filtration system of FIG. 1.
FIG. 7 is an exploded perspective view of the frame and the array of particulate separation elements of FIG. 6.
FIG. 8 is an exploded partial perspective view of the filtration assembly of the filtration system of FIG. 1.
FIG. 9 is a top perspective view of a filtration assembly of the filtration system of FIG. 1.
FIG. 10 is a bottom perspective view of a filtration assembly of the filtration system of FIG. 1.
FIG. 11 is a front cross-sectional view of the filtration assembly of FIG. 9 taken along the line 11-11 in FIG. 9.
FIGS. 12 and 13 are side perspective views of a particulate separation element of the filtration system of FIG. 1.
FIGS. 14 and 15 are partial side perspective views of the particulate separation element of the filtration system of FIG. 1.
FIG. 16 is a front perspective view of a filtration assembly of the filtration system of FIG. 1.
FIG. 17 is a front perspective view of a filtration assembly of the filtration system of FIG. 1.

Corresponding reference numerals indicate corresponding parts throughout the drawings.

### DETAILED DESCRIPTION

Example configurations will now be described more fully with reference to the accompanying drawings. Example configurations are provided so that this disclosure will be thorough, and will fully convey the scope of the disclosure to those of ordinary skill in the art. Specific details are set forth such as examples of specific components, devices, and methods, to provide a thorough understanding of configurations of the present disclosure. It will be apparent to those of ordinary skill in the art that specific details need not be employed, that example configurations may be embodied in many different forms, and that the specific details and the example configurations should not be construed to limit the scope of the disclosure.

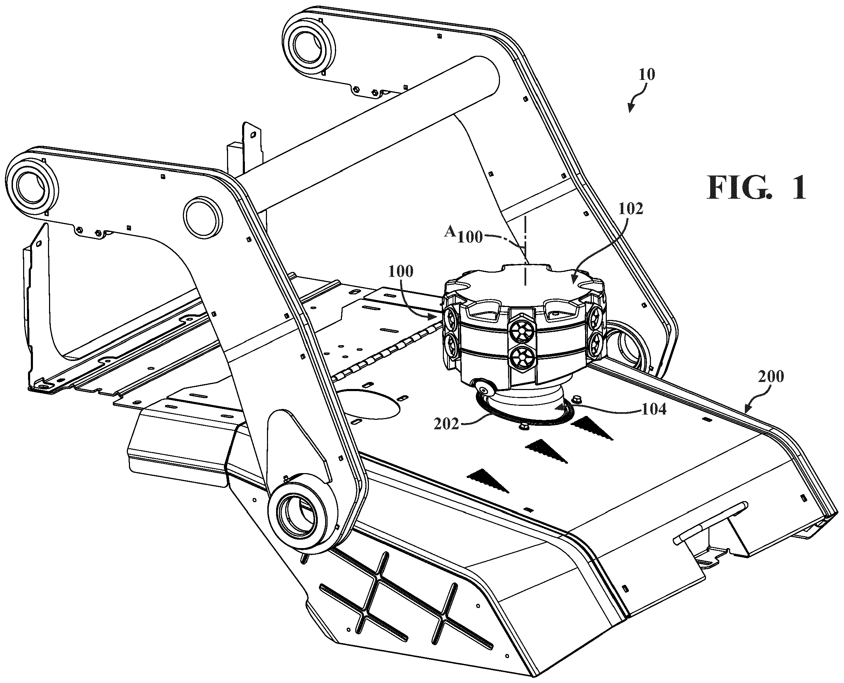

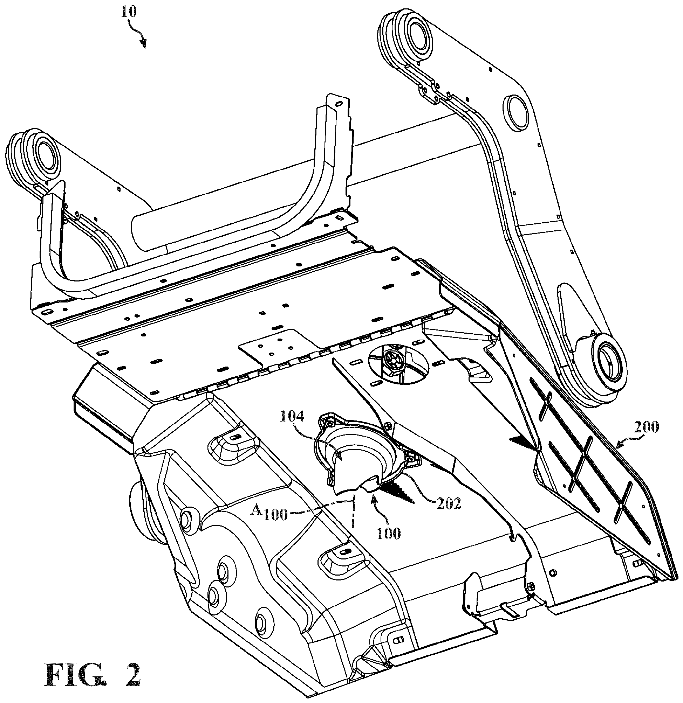

Referring to FIGS. 1 and 2, a filtration system 10 is illustrated and includes a filtration assembly 100 and a vehicle body 200. Briefly, and as described in more detail below, during operation of a vehicle, air 12 (e.g., engine exhaust air) is drawn through the filtration system 10 as the engine runs, through the filtration assembly 100, and into an air intake of the engine of the vehicle. The filtration assembly 100 includes a pre-cleaner system 102 connected to an output duct 104, where the pre-cleaner system 102 forms an array of air inlets 106, 106a-n of the filtration assembly 100 and the output duct 104 forms a clean air outlet 108 of the filtration assembly 100. The vehicle body 200 includes an opening 202 extending through a thickness of the vehicle body 200 and configured to receive the output duct 104 of the filtration assembly 100. As shown in FIGS. 1-3, the pre-cleaner system 102 removes particulates 14 from the air 12 drawn through the air inlets 106 and retains removed particulates 14 while exhausting clean air 12C via the output duct 104, through the clean air outlet 108 to the vehicle engine. Advantageously, and as discussed in further detail below, rather than replacing a filter media when it is full of removed particulates 14, the pre-cleaner system 102 can be emptied when it is full of removed particulates 14 via cleanout ports 170a, 170b.

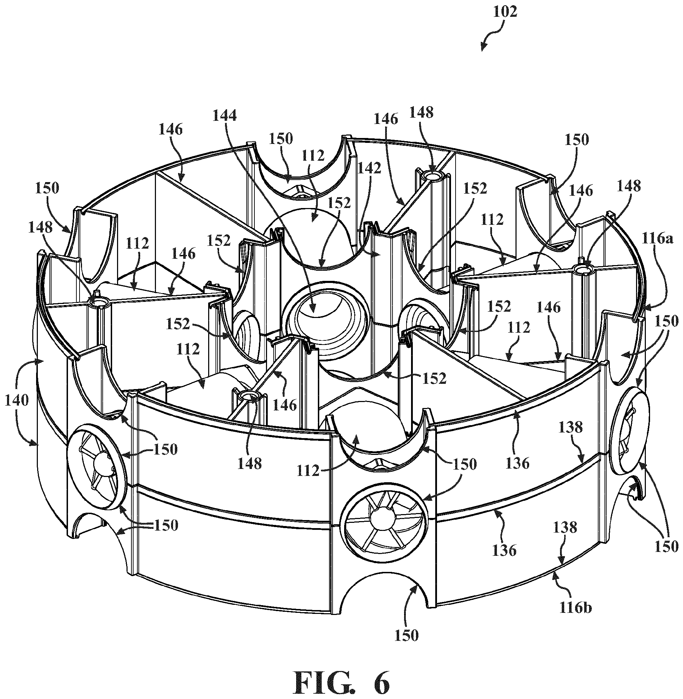

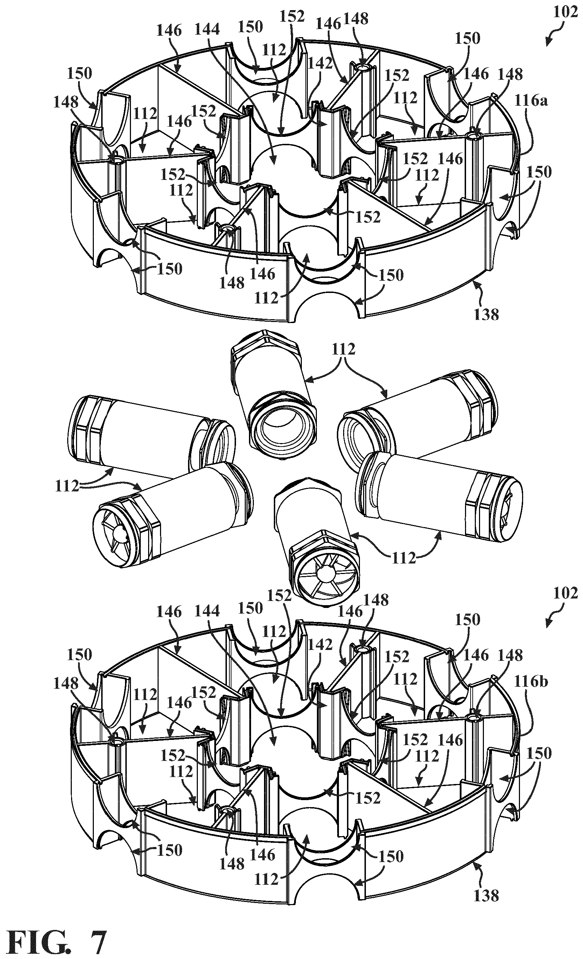

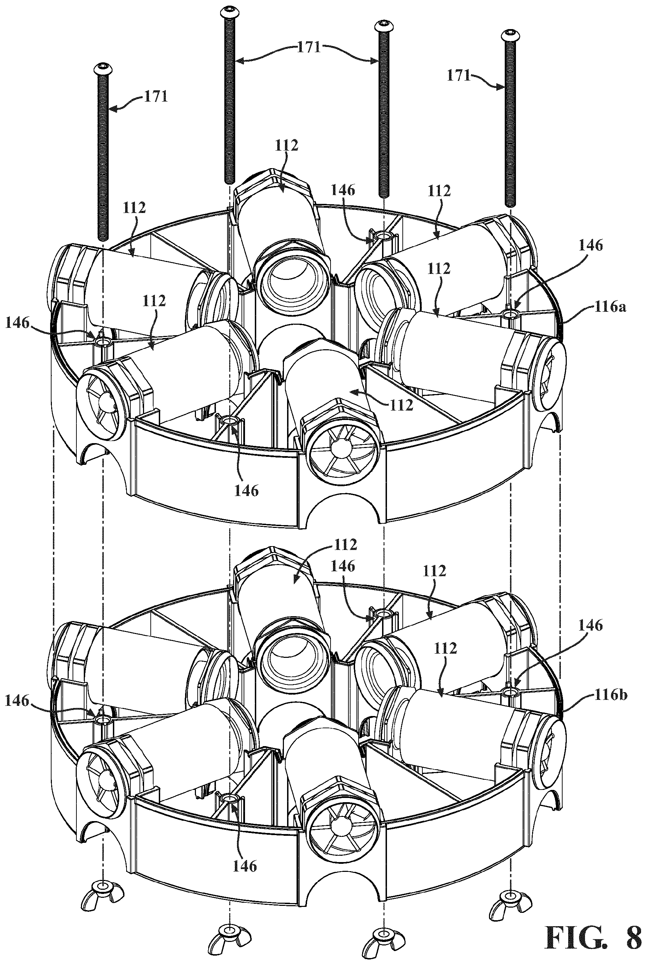

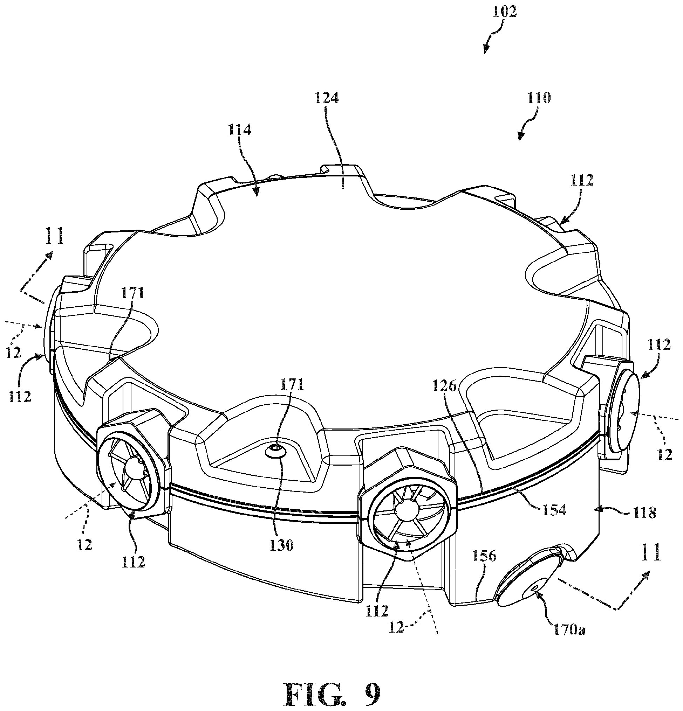

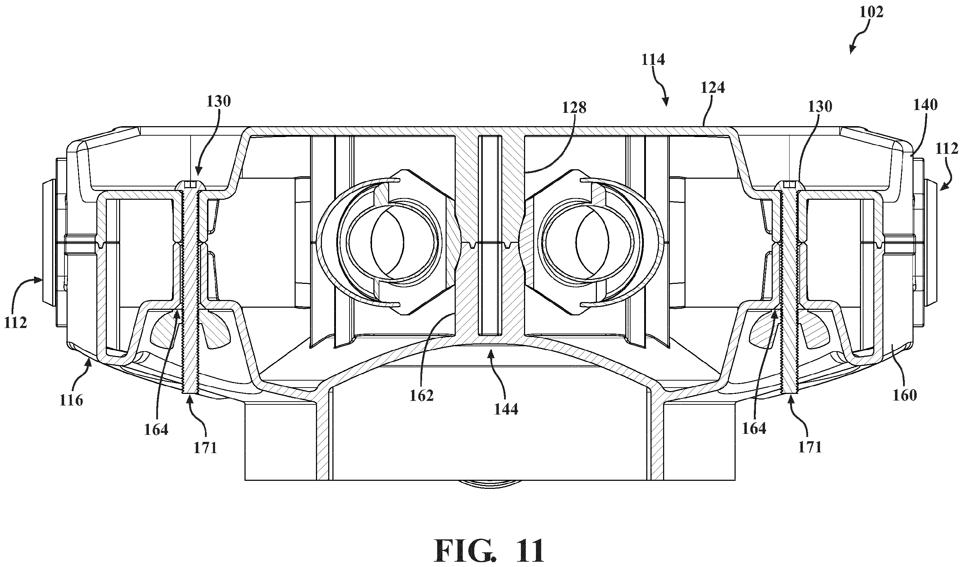

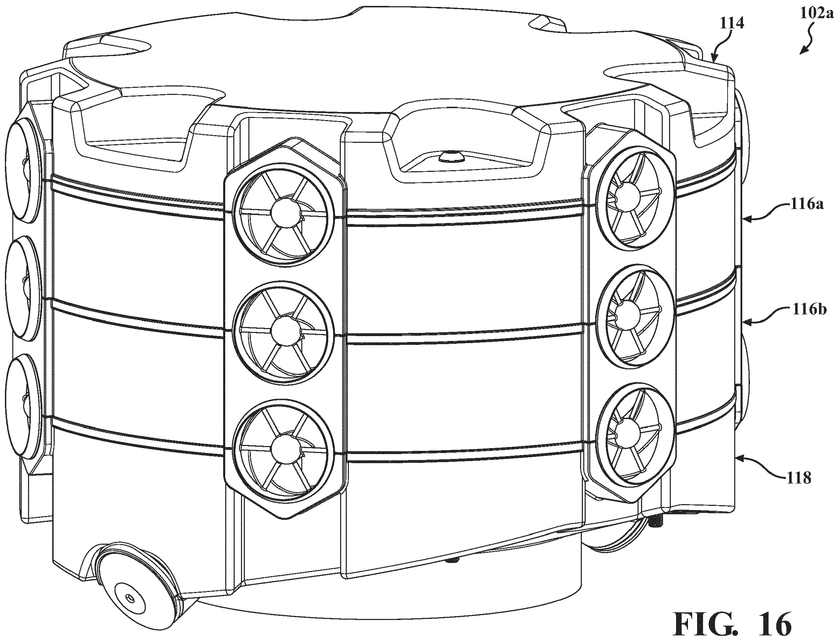

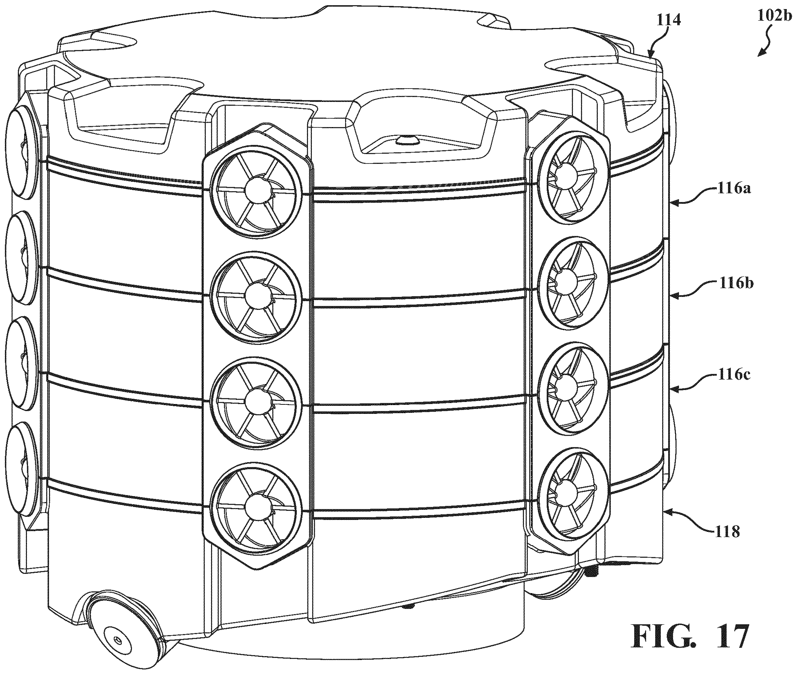

Referring to FIGS. 1-4, the pre-cleaner system 102 includes a frame 110 and an array of particulate separation elements 112, 112a-n disposed within the frame 110. In the illustrated example, the frame 110 of the pre-cleaner system 102 is cylindrical, and includes the array of particulate separation elements 112 arranged in a stacked (i.e., three-dimensional) radial array about center axis A₁₀₀ of the filtration assembly 100. The frame 110 is modular and includes a cap 114, a particulate tray 118, and one or more spacers 116 disposed between the cap 114 and the particulate tray 118. As will be discussed further below, each of the components of the frame 110 (i.e., the cap, the one or more spacers 116, the particulate tray 118) include respective recesses (132, 134, 150, 152, 166, 168) that cooperate with adjacent recesses (132, 134, 150, 152, 166, 168) in the components of the frame 110 to form sockets. Here, each socket formed by the adjacent recesses (132, 134, 150, 152, 166, 168) is sized to receive a respective particulate separation element 112 of the array of particulate separation elements 112. While FIGS. 1-4 show a single spacer 116, due to the modularity of the frame 110 of the pre-cleaner system 102, it should be appreciated that any number of spacers 116 may be included in the frame 110 to accommodate any number of particulate separation elements 112 in the array of particulate separation elements 112 based on the capacity needs of the filtration system 10. For example, FIGS. 6-8 and 16 illustrate a pre-cleaner system 102a having two (2) spacers 116a, 116b. In other examples, FIG. 17 illustrates a pre-cleaner system 102b having three (3) spacers 116a, 116b, 116c. In further examples, as shown in FIGS. 9-11, the pre-cleaner system 102 may not include any spacers 116, and instead the cap 114 may be directly coupled to the particulate tray 118.

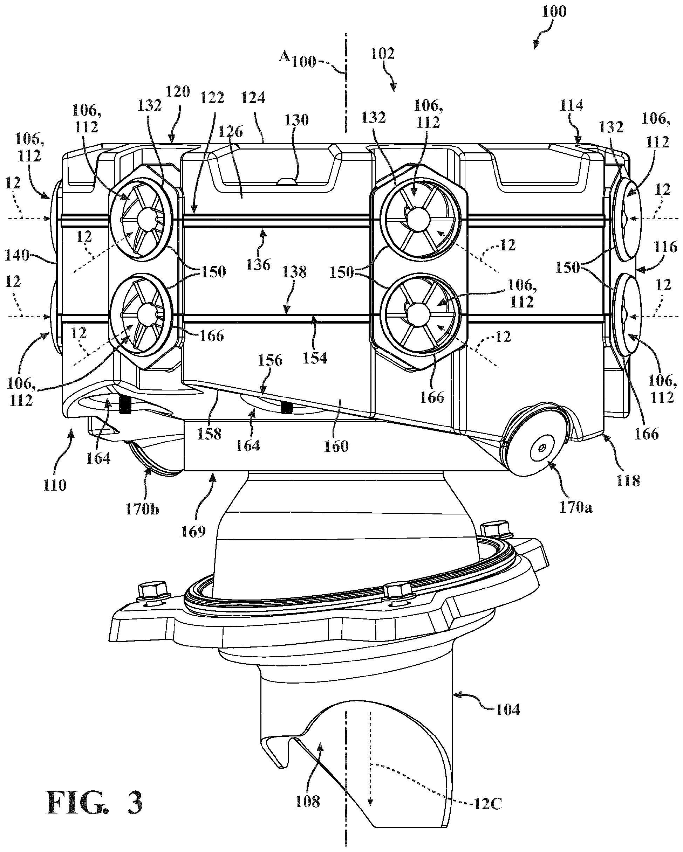

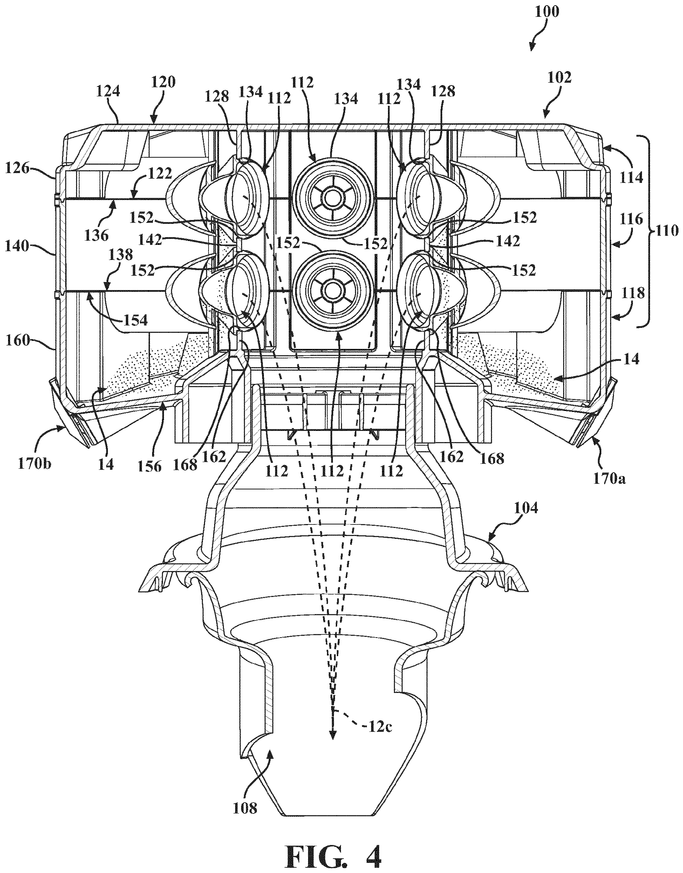

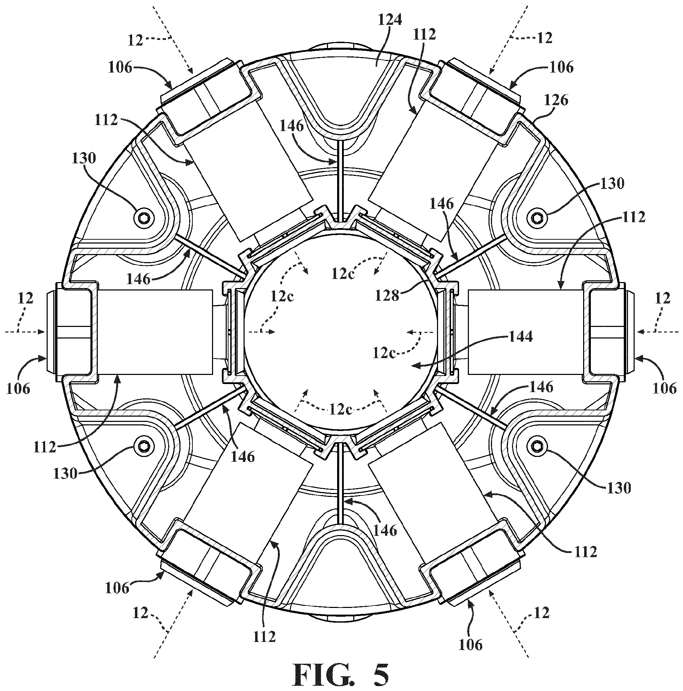

With reference to FIGS. 3 and 4, the cap 114 is generally cylindrical and includes a first end 120 and a second end 122 disposed on an opposite side of the cap 114 from the first end 120. The cap 114 further includes a top panel 124 disposed at the first end 120, a cap outer perimeter wall 126 extending from the top panel 124 at the first end 120 to the second end 122 of the cap 114, and a cap inner perimeter wall 128 spaced inward from the cap outer perimeter wall 126 and extending from the top panel 124 at the first end 120 to the second end 122 of the cap 114. The cap 114 additionally includes a plurality of cap outer recesses 132 formed through a thickness of the cap outer perimeter wall 126 and a plurality of cap inner recesses 134 formed through a thickness of the cap inner perimeter wall 128. In particular, the recesses 132, 134 extend from the second end 122 of the cap 114 and toward the first end 120 of the cap 114. Additionally, the cap 114 includes a plurality of cap apertures 130 formed through a thickness of the top panel 124. As shown in FIGS. 3, 5, and 9, the cap apertures 130 are configured to receive fasteners 171 that secures the cap 114, the spacer 116, and the particulate tray 118 of the frame 110 of the pre-cleaner system 102 together. As shown, the fasteners 171 include screw bolts and corresponding wingnuts; however, the fasteners 171 may include any implement for mechanically fixing the components of the frame 110 of the pre-cleaner system 102 together.

Like the cap 114, the spacer 116 is generally cylindrical and includes a first end 136 and a second end 138 disposed on an opposite side of the spacer 116 from the first end 136. The spacer 116 further includes a spacer outer perimeter wall 140 extending from the first end 136 to the second end 138 of the spacer 116, and a spacer inner perimeter wall 142 spaced inward from the spacer outer perimeter wall 140 and extending the first end 136 to the second end 138 of the spacer 116. As shown, the spacer inner perimeter wall 142 defines a central opening 144 of the pre-cleaner system 102 in fluid communication with the output duct 104 through which clean air 12C flows. The spacer 116 further includes spokes 146 extending between and connecting the spacer outer perimeter wall 140 and the spacer inner perimeter wall 142. One or more of the spokes 146 may include respective spacer apertures 148 formed through a thickness of the spoke 146 (i.e., from the first end 136 of the spacer 116 to the second end 138 of the spacer 116). The spacer apertures 148 are configured to receive the fasteners 171 that secure the components of the pre-cleaner system 102 together. The spacer 116 additionally includes a plurality of spacer outer recesses 150 formed through a thickness of the spacer outer perimeter wall 140 and a plurality of spacer inner recesses 152 formed through a thickness of the spacer inner perimeter wall 142. As shown, a first set of recesses 150, 152 are formed in the first end 136 of the spacer 116 and extend toward the second end 138 of the spacer 116. Conversely, a second set of recesses 150, 152 is axially aligned with the first set and are formed in the second end 138 of the spacer 116 and extend toward the first end 136 of the spacer 116.

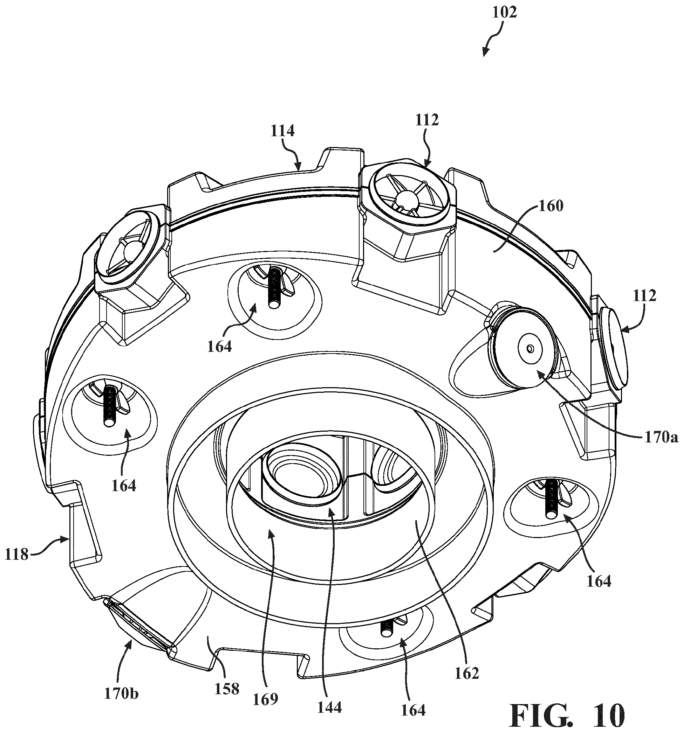

With continued reference to FIGS. 3 and 4, the particulate tray 118 is generally cylindrical and includes a first end 154 and a second end 156 disposed on an opposite side of the particulate tray 118 from the first end 154. The particulate tray 118 further includes a bottom panel 158 disposed at the second end 156, a particulate tray outer perimeter wall 160 extending from the bottom panel 158 at the second end 156 to the first end 154 of the particulate tray 118, and a particulate tray inner perimeter wall 162 spaced inward from the particulate tray outer perimeter wall 160 and extending from the bottom panel 158 at the second end 156 to the first end 154 of the particulate tray 118. The particulate tray 118 additionally includes a plurality of particulate tray outer recesses 166 formed through a thickness of the particulate tray outer perimeter wall 160 and a plurality of particulate tray inner recesses 168 formed through a thickness of the particulate tray inner perimeter wall 162. In particular, the recesses 166, 168 extend from the first end 156 of the particulate tray 118 and toward the second end 154 of the particulate tray 118. Additionally, the particulate tray 118 may include a plurality of particulate tray apertures 164 formed through a thickness of the bottom panel 158. As shown in FIGS. 3 and 10, the particulate tray apertures 164 are configured to receive the fasteners 171 that secures the cap 114, the spacer 116, and the particulate tray 118 of the frame 110 of the pre-cleaner system 102 together. As shown, the particulate tray inner perimeter wall 162 defines a tray central opening 169 of the pre-cleaner system 102 that aligns with the central opening 144 formed through the spacer 116 and the clean air outlet 108 of the filtration assembly to channel clean air 12C into the vehicle body 200. Additionally, the particulate tray 118 includes the cleanout ports 170a, 170b through which particulates 14 separated from the air 12 can be removed from the particulate tray 118.

Referring to FIGS. 3-8, when the pre-cleaner system 102 is assembled, the cap apertures 130, the spacer apertures 148, and the particulate tray apertures 164 are aligned to receive the fasteners 171. By lining up the respective apertures 130, 148, 158, the cap outer perimeter wall 126, the spacer outer perimeter wall 140, and the particulate tray outer perimeter wall 160 are also aligned and form a substantially flush outer wall of the pre-cleaner system 102. Further, the cap inner perimeter wall 128, the spacer inner perimeter wall 142, and the particulate tray inner perimeter wall 162 are aligned to allow clean air 12C to exit the pre-cleaner system 102, while particulates 14 separated from the air 12 fall to the particulate tray 118 and are collected in the bottom panel 158 of the particulate tray 118.

As discussed briefly above, each adjacent component (i.e., the cap 114, the one or more spacers 116, the particulate tray 118) cooperate with another adjacent component to form one or more sockets each sized to receive a particulate separation element 112 of the array of particulate separation elements 112. For example, as shown in FIGS. 3 and 4, each cap outer recess 132 cooperates with an opposing spacer outer recess 150 and each cap inner recess 134 cooperates with an opposing spacer inner recess 152 to form a socket that receives a particulate separation element 112. Similarly, each spacer outer recess 150 cooperates with an opposing particulate tray outer recess 166 and each spacer inner recess 152 cooperates with an opposing particulate tray inner recess 168 to form a socket that receives a particulate separation element 112.

As described above, the particulate separation elements 112 are disposed within the pre-cleaner system 102 in a radial array about center axis A₁₀₀ of the filtration assembly 100. The pre-cleaner system 102 may include the array of particulate separation elements 112 that are designed to receive incoming air 12 from the environment (i.e., at the air inlets 106), and separately output particulates 14 and clean air 12C. As shown in FIGS. 1-4 and 8, the array of particulate separation elements 112 includes twelve particulate separation elements 112. Here, each of the particulate separation elements 112 is disposed within the frame 110 of the pre-cleaner system 102 such that each particulate separation element 112 is connected to the pre-cleaner system 102 and operates in parallel. However, as described above, due to the modularity of the pre-cleaner system 102 (via the spacers 116), any combination of spacers 116 and particulate separation elements 112 may be used without departing from the scope of the present disclosure.

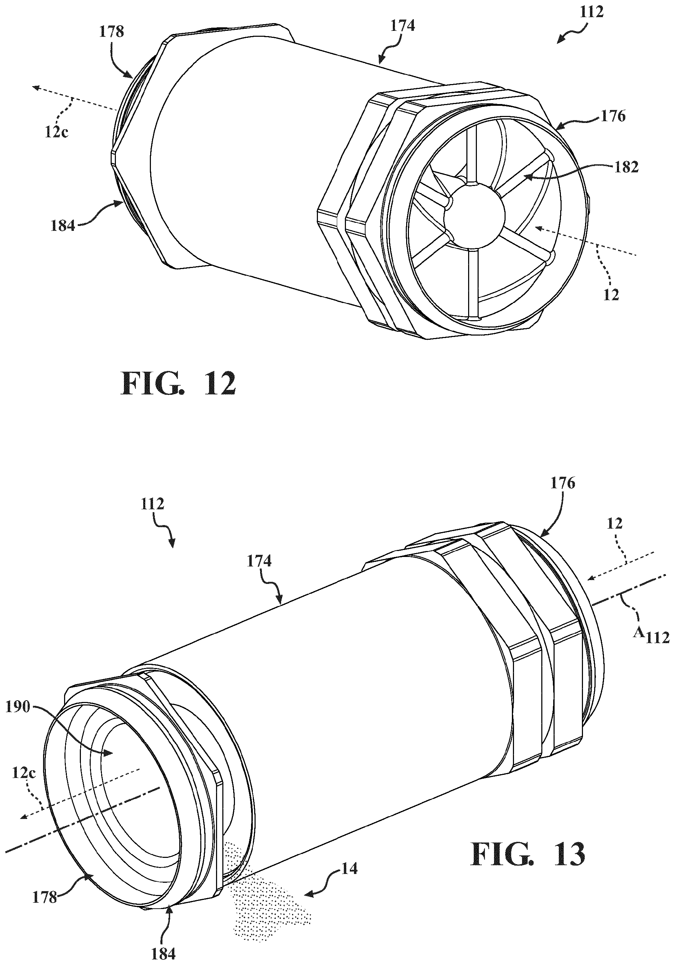

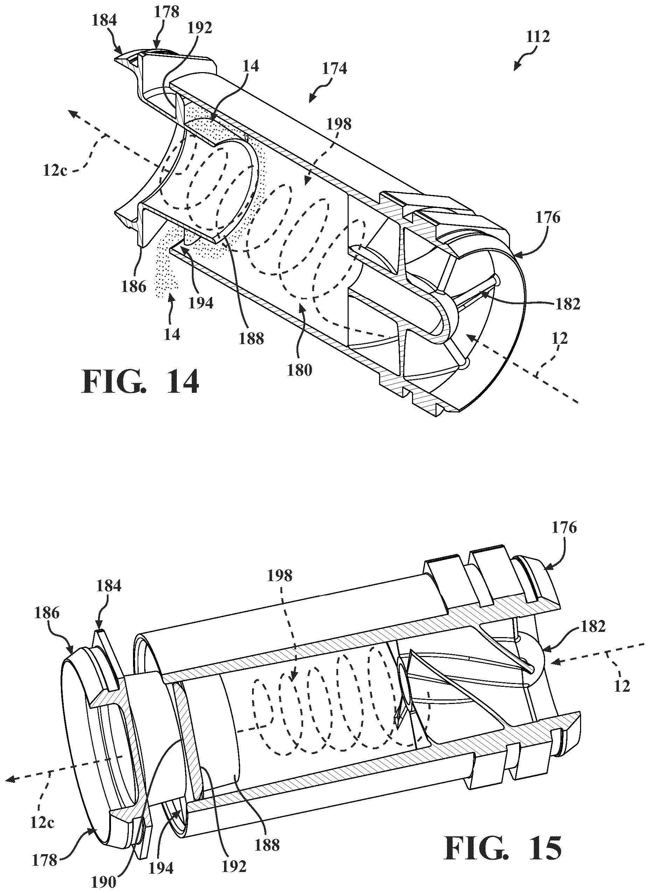

Referring to FIGS. 12-15, the particulate separation element 112 is a cyclone filter having a tube-shaped body 174 that extends from a first end 176 to a second end 178 disposed on an opposite side of the body 174 than the first end 176 to define a cyclone cavity 180 defining a central axis A₁₁₂ of the particulate separation element 112. The first end 176 of the particulate separation element 112 generally corresponds to the air inlet 106 of the pre-cleaner system 102, and includes a guide vane 182 disposed within the cyclone cavity 180 that directs air 12 from the environment into the cyclone cavity 180. The second end 178 of the particulate separation element 112 includes a cap 184 having a cap outer flange 186 formed outside the cyclone cavity 180, and a cap inner conduit 188 disposed within the cyclone cavity 180. The particulate separation element 112 further includes an inner flange 192 spaced axially inward from the second end 178, which is sized to receive the cap inner conduit 188 of the cap 184 such that the cap 184 and the inner flange 192 cooperate to form a central opening 190 for the clean air 12C to exit the particulate separation element 112. As shown in FIGS. 14 and 15, the inner flange 192 includes a notch 194 formed through a thickness of the inner flange 192. The notch 194 in the inner flange 192 allows the separated particulates 14 to pass through the cap 184 to fall into the particulate tray 118.

As shown, the guide vane 182 is configured to direct the air 12 into the cyclone cavity 180 in a substantially coaxial manner relative to the central axis A₁₁₂ of the particulate separation element 112, which is perpendicular to the central axis A₁₀₀ of the filtration assembly 100. During operation of the filtration system 10, the air 12 enters the filtration assembly 100 axially via the air inlets 106 at the first end 176 of the particulate separation elements 112, where the guide vane 182 of each particulate separate element 112 directs the air in an axial and rotational direction within the cyclone cavity 180 toward the second end 178 of the body 174, creating a spiral vortex 198 flowing from the first end 176 of the body 174 to the central opening 190 disposed at the second end 178 of the body 174. As the air 12 flows within the spiral vortex 198, the particulates 14, due to their mass and centrifugal force, are biased to the outer perimeter of the spiral vortex 198 and exit the particulate separation element 112 through the notch 194 in the inner flange 192, falling into the particulate tray 118 below the particulate separation element. As the particulates 14 are separated from the air 12 by the spiral vortex, the clean air 12C flows through the central opening 190 along the axis A₁₁₂ to the output duct 104 of the filtration assembly 100. When the particulate tray 118 is full of particulates 14, a user may empty the particulate tray 118 by sucking the particulates 14 out via a vacuum connected one or more of the cleanout ports 170a, 170b.

The foregoing description provides various examples of a filtration system 10 that is configured in a modular manner, whereby filtration capacity of the system 10 can be easily modified to account for different operational and environmental factors. For example, the pre-cleaner system 102 can be modified to increase filtration capacity by simply adding additional sets of the spacers 116 and corresponding particulate separation elements 112 to the pre-cleaner system. This may be advantageous in instances where equipment that has been operated in a relatively clean environment (e.g., inside of a factory) is moved to a relatively dirty environment (e.g., outdoor construction site) and the filtration capacity for the filtration system 10 needs to be increased to account for dirtier air. Thus, the filtration system 10 can provide any level of filtration capacity using standard parts, thereby eliminating the need to design, manufacture, and inventory a wide variety of filter elements for different filtration capacities.

The foregoing description has been provided for purposes of illustration and description. It is not intended to be exhaustive or to limit the disclosure. Individual elements or features of a particular configuration are generally not limited to that particular configuration, but, where applicable, are interchangeable and can be used in a selected configuration, even if not specifically shown or described. The same may also be varied in many ways. Such variations are not to be regarded as a departure from the disclosure, and all such modifications are intended to be included within the scope of the disclosure.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

When an element or layer is referred to as being "on," "engaged to," "connected to," "attached to," or "coupled to" another element or layer, it may be directly on, engaged, connected, attached, or coupled to the other element or layer, or intervening elements or layers may be present. In contrast, when an element is referred to as being "directly on," "directly engaged to," "directly connected to," "directly attached to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

## Claims

1. A filtration assembly comprising:
a modular frame defining a plurality of sockets and including a particulate tray; and
an array of particulate separation elements for removing particulates from air, each particulate separation element of the array of particulate separation elements disposed within a respective socket of the plurality of sockets and defining an inlet of the filtration assembly.

2. The filtration assembly of Claim 1, wherein the particulate tray is configured to collect the removed particulates.

3. The filtration assembly of Claim 1, wherein the frame further includes a cap and one or more spacers, the one or more spacers disposed between the cap and the particulate tray.

4. The filtration assembly of Claim 3, wherein the cap, the one or more spacers, and the particulate tray are axially aligned along a central axis of the filtration assembly.

5. The filtration assembly of Claim 3, wherein the cap, the one or more spacers, and the particulate tray are secured together via fasteners.

6. The filtration assembly of Claim 1, wherein the array of particulate separation elements are disposed within the frame in a radial array about a central axis of the filtration assembly.

7. The filtration assembly of Claim 6, wherein the frame further defines a central opening in fluid communication with the array of particulate separation elements, the central opening defining an outlet of the filtration assembly.

8. The filtration assembly of Claim 7, wherein the central opening is substantially coaxial with the central axis of the filtration assembly.

9. The filtration assembly of Claim 7, wherein a central axis of each particulate separation element in the array of particulate separation elements is substantially perpendicular to the central axis of the filtration assembly.

10. The filtration assembly of Claim 1, wherein the array of particulate separation elements are disposed in a three-dimensional radial array about a central axis of the filtration assembly.

11. A filtration assembly comprising:
a modular frame defining a plurality of sockets; and
an array of particulate separation elements for removing particulates from air, each particulate separation element of the array of particulate separation elements disposed within a respective socket within the frame in a radial array about a central axis of the filtration assembly.

12. The filtration assembly of Claim 11, wherein each particulate separation element of the array of particulate separation elements defines an inlet of the filtration assembly.

13. The filtration assembly of Claim 11, wherein the frame includes a particulate tray configured to collect the removed particulates.

14. The filtration assembly of Claim 13, wherein the frame further includes a cap and one or more spacers, the one or more spacers disposed between the cap and the particulate tray.

15. The filtration assembly of Claim 14, wherein the cap, the one or more spacers, and the particulate tray are axially aligned along the central axis of the filtration assembly.

16. The filtration assembly of Claim 14, wherein the cap, the one or more spacers, and the particulate tray are secured together via fasteners.

17. The filtration assembly of Claim 11, wherein the frame further defines a central opening in fluid communication with the array of particulate separation elements, the central opening defining an outlet of the filtration assembly.

18. The filtration assembly of Claim 17, wherein the central opening is substantially coaxial with the central axis of the filtration assembly.

19. The filtration assembly of Claim 17, wherein a central axis of each particulate separation element in the array of particulate separation elements is substantially perpendicular to the central axis of the filtration assembly.

20. The filtration assembly of Claim 11, wherein the array of particulate separation elements are disposed in a three-dimensional radial array about the central axis of the filtration assembly.
